Europäisches Patentamt

European Patent Office

Office européen des brevets

(11) Veröffentlichungsnummer: **0 235 314**
A1

(12) # EUROPÄISCHE PATENTANMELDUNG

(21) Anmeldenummer: **86102313.3**

(22) Anmeldetag: **22.02.86**

(51) Int. Cl.⁴: **F16L 59/16**

(43) Veröffentlichungstag der Anmeldung:
**09.09.87 Patentblatt 87/37**

(84) Benannte Vertragsstaaten:
**AT BE CH DE FR GB IT LI LU NL SE**

(71) Anmelder: **Jacobs, Ludwig**
**Lagesche Strasse 8**
**D-4790 Paderborn(DE)**

(72) Erfinder: **Jacobs, Ludwig**
**Lagesche Strasse 8**
**D-4790 Paderborn(DE)**

(54) Gehäuse für wärmeisolierte Armaturen und/oder Flanschverbindungen.

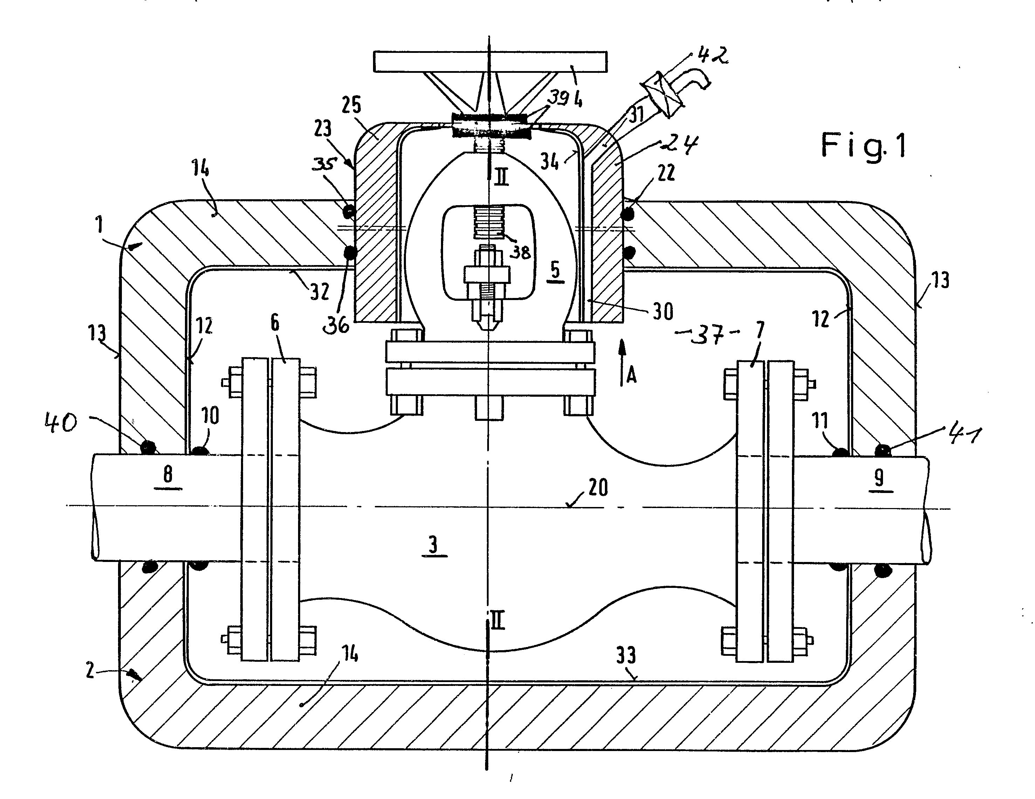

(57) Die Erfindung betrifft ein Gehäuse für wärmeisolierte Armaturen und/oder Flanschverbindungen mit zwei oder mehreren kastenförmigen Gehäuseteilen (1, 2), bei welchem die Gehäuseteile (1, 2) und ein Adapterstück (23) und etwaige Betätungsvorrichtung (5) mit Spindel (28) o. dgl. durch geeignete Dichtungselemente (35, 36, 39, 40, 41, 44, 45) so nach außen hin abgedichtet sind, daß sich das Gehäuseinnere (37) unter einem gewissen Unterdruck gegenüber der äußeren Atmosphäre setzen läßt. Dadurch werden Versottungen und Kondensationen, und zwar im Kaltwasserbereich, bei erheblich höherer Umgebungstemperatur innerhalb des Gehäuses (1, 2) vermieden (Fig. 1).

Fig. 1

Die Erfindung betrifft ein Gehäuse für wärmeisolierte Armaturen und/oder Flanschverbindungen, mit zwei kastenförmigen Gehäuseteilen mit vorzugsweise zwei Öffnungen für die Rohrleitungen und insbesondere einer weiteren Öffnung für die aus dem Gehäuse herausgeführte Betätigungsvorrichtung der Armatur, wobei die Gehäuseteile benachbart der Gehäuseteilungsebene wenigstens je einen Flansch o. dgl. aufweisen und die Gehäuseteile durch Schrauben lösbar miteinander verbunden sind, die durch Umfangsabschnitte der Gehäuseteile in Form von Befestigungsflansche o. dgl. greifen, wobei insbesondere den Gehäuseteilen ihre Einbaulage zueinander vorzugsweise zentrierende bzw. bestimmende, formschlüssig ineinandergreifende, mit den Gehäuseteilen einstückig verbundene Zentriermittel zugeordnet sind, die nach Art einer Nut-Feder-Verbindung ausgestaltet sind und die sich über zumindest Teile des Umfanges der Gehäuseteile erstrecken.

## Stand der Technik

Ein Gehäuse gemäß der Gattung ist durch die US-PS 3 724 491 vorbekannt. Dieses Gehäuse besitzt den Nachteil, daß es wegen der Vielzahl der Befestigungsschrauben schwer zu montieren und zu demontieren ist. An der jeweils verdeckten Rückseite des Gehäuses lassen sich bei beengten Raumverhältnissen die Schrauben überhaupt nicht montieren, so daß dieses Gehäuse nur dort eingesetzt werden kann, wo allseitig ausreichend Raum zum Montieren und Demontieren zur Verfügung steht.

Durch das DE-GM 74 36 866 ist ein Gehäuse für wärmeisolierte Rohrleitungsschieber, bestehend aus zwei kastenförmigen Gehäuseteilen mit zwei koaxialen Öffnungen für die Rohrleitungen und einer weiteren Öffnung für die aus dem Gehäuse herausgeführte Schieberbetätigungseinrichtung vorbekannt, wobei die Öffnungen von der Teilungsebene des Gehäuses etwa halbiert sind und wobei jede Gehäusehälfte benachbart der Gehäuseteilungsebene eine nur von den Gehäuseöffnungen unterbrochenen Umfangsflansch aufweist, und jede Gehäuseöffnung von einem ringförmigen Stutzen begrenzt ist, derart, daß die Enden der Unfangsflanschabschnitte im Bei_ch der Gehäuseöffnungen durch einen Halbringstutzen miteinander verbunden sind. Die Umfangsflansche ragen scharfkantig nach außen, und zwar rechtwinklig zur Umfangsebene der Gehäusehälften hervor und sind mittels druckknopfverschlußartiger Befestigungselemente lösbar miteinander zu verbinden, welche durch Löcher in den Umfangsflanschen hindurchgreifen.

Die nach außen abstehenden Umfangsflansche stören bei der Handhabung der Gehäuseteile, insbesondere bei engen Raumverhältnissen und können auch zu Handverletzungen der mit der Montage solcher Gehäuseteile beschäftigten Personen führen. Darüberhinaus vergrößern diese nach außen abstehenden Umfangsabschnitte den in Anspruch genommenen Raum, der nicht zur Verfügung steht. Da die Gehäuseteile häufig gelöst und wieder zusammengebaut werden müssen, weil z.B. dringend notwendige Wartungs-und/oder Reparaturarbeiten an den Armaturen, z.B. Absperrschiebern, vorzunehmen sind, ergibt sich der weitere Nachteil, daß die Druckknopfverbindung ausleiert und nicht mehr zuverlässig die Gehäuseteile verbindet.

Bekannt ist es auch, die Gehäuseteile um Armaturen und/oder Rohrflansche anzuordnen und die Gehäuseteile durch Bänder und Kniehebelverschlüsse gegeneinander zu arretieren. Die Montage solcher Gehäuse ist umständlich. Außerdem gehen in der Praxis oftmals Bänder verloren.

Dies hat zur Folge, daß dann entweder die Gehäuseteile nicht oder nur unvollständig nach Durchführung von Wartungs-und/oder Reparaturarbeiten montiert werden müssen, so daß das Gehäuse seine Funktion nicht oder nicht vollständig erfüllen kann.

Zudem bereitet bei dieser Konstruktion unter beengten Raumverhältnissen das Lösen und Wiederbefestigen der Gehäuseteile erhebliche Schwierigkeiten, zumal sich die Gehäuseteile nur mühsam in eine paßgerechte Lage zueinander bringen lassen.

Schließlich ist diese Lösung auch kostenaufwendig, wobei ihre Funktion von der Sorgfalt des Montagepersonals abhängig ist.

## Ältere, nicht vorveröffentlichte deutsche und europäische Patentanmeldung

Gegenstand der nicht vorveröffentlichten, auf den gleichen Anmelder zurückgehenden deutschen Patentanmeldung P 33 38 633.1-25 und der entsprechenden europäischen Patentanmeldung bildet ein Gehäuse gemäß dem Gattungsbegriff, wobei die Erfindung ein Gehäuse für wärmeisolierte Armaturen und/oder Flanschverbindungen betrifft, mit zwei kastenförmigen Gehäuseteilen mit vorzugsweise zwei Öffnungen für die Rohrleitungen und insbesondere einer weiteren Öffnung für die aus dem Gehäuse herausgeführte Betätigungsvorrichtung der Armatur, wobei die Gehäuseteile benachbart der Gehäuseteilungsebene wenigstens je einen Flansch aufweisen und die Gehäuseteile durch Schrauben lösbar miteinander verbunden sind, die durch Umfangsabschnitte der Gehäuseteile in Form von Befestigungsflanschen greifen, wobei den Gehäuseteilen ihre Einbaulage zueinander zentrierende bzw. bestimmende, formschlüssig ineinandergreifende, mit den Gehäuseteilen einstückig verbundene Zentriermittel zugeordnet sind, die nach Art einer Nut-Feder-Verbindung ausgestaltet sind und die sich über zumindest Teile des Umfanges der Gehäuseteile erstrecken.

Dadurch, daß die Befestigungsflansche bei den nicht vorveröffentlichten Patentanmeldungen nach innen, also zum Innern des Gehäuses, gerichtet sind, sind bei diesem nicht vorveröffentlichten Gehäuse an der Außenseite keinerlei störende Teile vorhanden. Dadurch baut ein solches Gehäuse relativ klein in seinen Außenabmessungen. Auch stehen keine scharfen Kanten nach außen hervor, an denen Verletzungen möglich wären.

Durch die nur an einer Seite angebrachten Schrauben lassen sich die Gehäuseteile in ihre Zentriermittel gegeneinanderziehen, so daß sich eine besonders stabile, unverrückbare Lage der Gehäuseteile nicht nur in axialer Richtung des Gehäuses, sondern auch quer dazu ergibt. Die Zugänglichkeit dieser Befestigungsschrauben ist immer gegeben, da sie stets so angeordnet werden können, daß sie sich an der gut zugänglichen Stelle befinden.

Alles in allem ergibt sich eine robuste Konstruktion. Die Zentriermittel lassen sich bei der Fertigung des Gehäuses problemlos mit anformen. Dies gilt sowohl für Gehäuse aus einem metallischen Werkstoff, z.B. aus Blech, als auch für Kunststoff-Gehäuseteile.

Durch die Zentriermittel können die Gehäuseteile gewissermaßen "blind", und zwar auch in engen Raumecken, in eine funktionsgerechte Lage gebracht und montiert werden. Die Gehäuseteile werden dabei praktisch über den gesamten Umfang des Gehäuses axial und radial zentriert und können sich nicht z.B. quer gegeneinander verschieben. Dadurch erhält das Gehäuse insgesamt ein geschlossenes, formschönes, akkurates Äußeres, auf dem sich wenig Schmutz ansetzen kann. Zusammen mit den Befestigungsschrauben lassen sich dabei die Gehäuseteile so dicht gegeneinander ziehen, daß die Gehäuseteile gewissermaßen fugenlos gegeneinander anliegen.

Im Rahmen dieser nicht vorveröffentlichten älteren Patentanmeldungen liegt eine Ausführungsform, bei welcher die Zentriermittel einerseits eine gute Zentrierung der Gehäuseteile durch formschlüssiges Ineinandergriefen trapezförmig gestalteter Nuten und Sicken ermöglichen, andererseits weisen solche Zentriermittel auch ein hohes Widerstandsmoment gegen Verformung auf, so daß selbst bei relativ hohen Querbeanspruchungen, die gegen ein solches Gehäuse einwirken könnten, z.B. durch Stoß oder Schlag, keine Relativverschiebung der Gehäuseteile zueinander stattfinden kann. Vielmehr bleiben die Gehäuseteile schon nach dem Ineinandergreifen der Zentriermittel in fluchtender Lage zueinander.

Die Befestigungsschrauben sind bei dieser nicht vorveröffentlichten Konstruktion mit mindestens einem der Gehäuseteile unverlierbar verbunden. Dadurch können auch nach mehrmaliger Demontage des Gehäuses die Befestigungsmittel nicht verlorengehen, z.B. nicht in engen Kellerräumen auf den Boden fallen. Durch die besondere Ausgestaltung der Schraublöcher wird sichergestellt, daß auch lange Befestigungsschrauben zuverlässig in Richtung auf die in den Flanschen vorgesehenen Schraublöcher geführt werden, so daß keine langen Such-und/oder Anpaßarbeiten erforderlich sind, um die Schrauben in eine paßgerechte Lage zu bringen, um sie anziehen zu können.

## Aufgabe

Der Erfindung liegt die Aufgabe zugrunde, ein Gehäuse nach der gattungsmäßig vorausgesetzten Art so auszugestalten, daß nicht nur unterschiedliche Rohr-und/oder unterschiedliche Abmessungen der Betätigungseinrichtung, z. B. Spindelhöhen und/oder Spindeldurchmesser, berücksichtigt werden können, sondern das Innere des Gehäuses **auch im Kaltvasserbereich nach außen diffusionsgeschützt oder diffusionsgesperrt ist.**

## Lösung

Ausgehend von einem Gehäuse gemäß der Gattung wird diese Aufgabe erfindungsgemäß dadurch gelöst, daß bei Verwendung des Gehäuses im Kaltwasserbereich, z. B. für Kaltwassersätze in Klimaanlagen der Öffnung für die aus dem Gehäuse herausgeführte Betätigungsvorrichtung der Armatur und/oder einem oder mehreren Öffnungen für die Rohrleitungen jeweils ein in seiner axialen Erstreckung und/oder im Durchmesser veränderliches Adapterstück zum Ausgleich unterschiedlicher Abmessungen von Betätigungsvorrichtungen -axiale Länge der Betätigungsvorrichtung und/oder deren Durchmesser -und/oder der Rohrleitungen zugeordnet ist bzw. sind und daß das Gehäuse selbst, aber auch das Adapterstück und etwaige Öffnungen für die aus dem Gehäuse herausgeführte Betätigungsvorrichtung und Öffnungen für die in das Gehäuse einmündenden Rohrleitungen jeweils durch ein oder durch mehrere Dichtungselemente nach außen hin zur Aufrechterhaltung eines Unterdruckes im Gehäuse abgedichtet ausgebildet sind.

## Einige Vorteile

Bei Ausgestaltung gemäß der Erfindung ist ein gattungsgemäßes Gehäuse auf die jeweiligen Abmessungen der Betätigungsvorrichtung der Armatur, z.B. einem Spindelgehäuse, und/oder unterschiedlichen Rohrabmessungen, in einfacher Weise und schnell adaptierbar.

Dadurch ist auch eine leichte Vorratshaltung möglich, weil für bestimmte Armaturgrößen nur immer die gleichen Gehäuseteile am Lager bereitgehalten zu werden brauchen, während unterschiedliche Typen von Betätigungsvorrichtungen durch ein entsprechendes Adapterstück berücksichtigt werden. Diese Adaptierbarkeit an unterschiedliche Abmessungen von z.B. Betätigungsvorrichtungen der Armatur läßt sich an Ort und Stelle von Heizungsmonteur vornehmen, so daß für eine bestimmte Gehäusetype ein Sortiment von Adapterstücken gefertigt werden kann, mit dem alle am Markt vorkommenden Betätigungsvorrichtungstypen o. dgl. berücksichtigt werden können.

Durch die Abdichtung des Gehäuses an allen nach außen mündenden Öffnungen, Schlitzen und Durchbrechungen ergibt sich der Vorteil, daß das Gehäuse diffusionsgesperrt oder diffusionsgeschützt ausgebildet werden kann. Auf diese Weise lassen sich in Kaltwasserbereiche Kondensationen am Absperrkörper vermeiden, da keine Luft von außen in das Gehäuse und umgekehrt strömen kann. Vielmehr ist es vorteilhaft, das Gehäuse nach seiner Montage zumindest teilweise zu evakuieren, beispielsweise auf 0,03 bar. Dadurch werden auch Versottungen im Innern des Gehäuses und an den Armaturen vermieden, so daß bei etwaigen Wartungs-und/oder Reparaturarbeiten ein sauberes und leichtes Austauschen von Teilen gegeben ist. Nach Wartung wird der Unterdruck wieder mit einer entsprechenden Pumpe erzeugt.

## Weitere Ausführungsformen

In Patentanspruch 2 ist eine vorteilhafte Ausführungsform beschrieben, bei welcher das Adapterstück an seinem Umfang im Gehäuse durch eine oder mehrere Dichtungen, die in axialer Richtung des Adapterstückes hintereinander angeordnet sind, im Gehäuse axial verstellbar abgedichtet ist.

Auf diese Weise wird die Diffusionssperre zum Innern des Gehäuses gegen die äußere Atmosphäre auch bei einer etwaigen Verstellung des Adaptergehäuses aufrechterhalten.

Bei der Ausführungsform gemäß **Patentanspruch 3** sind auch die Gehäuseteile oder die Gehäusehälften an ihren aneinander angrendenden Wandabschnitten durch ein oder durch mehrere Dichtungselemente abgedichtet, die vorzugsweise an den ineinander eingreifenden Gehäuseabschnitten eingebettet angeordnet sind.

In **Patentanspruch 4** ist eine Ausführungsform beschrieben, bei der die Betätigungseinrichtung, beispielsweise ein Spindelgehäuse oder die Spindel selbst durch eine Manschette, eine Dichtungsmuffe oder durch ein geeignetes anderes Abdichtungselement luftdicht oder im wesentlichen luftdicht nach außen herausgeführt ist.

In **Patentanspruch 5** ist eine vorteilhafte erfinderische Lösung beschrieben. Solchermaßen ausgestaltete Dichtelemente sind widerstandsfähig gegen die üblicherweise in Industriebetrieben vorkommenden Gase, Dämpfe, Stäube und Industrieatmosphären; sie sind in dem erforderlichen Maße alterungs-und lichtbeständig und verlieren auch nach längerer Einsatzdauer ihr federelastisches Rückstellvermögen nicht, so daß sie nicht verspröden und lange einsatzbereit bleiben, d. h. das Gehäuse druckmitteldicht nach außen hin abschotten.

**Patentanspruch 6** beschreibt eine vorteilhafte Ausführungsform für die Ausgestaltung eines Anschlusses an den Innenraum des Gehäuses, um dieses im Bedarfsfalle auf den jeweils gewünschten Unterdruck evakuieren zu können.

In der Zeichnung ist die Erfindung an Ausführungsbeispielen-teils schematisch -veranschaulicht. Es zeigen:

Fig. 1 ein Gehäuse gemäß der Erfindung im Längsschnitt, um einen Absperrschieber mit Betätigungsvorrichtung und zwei aus dem Gehäuse heraustretenden, an die Armatur angeflanschten Leitungen montiert;

Fig. 2 einen Querschnitt nach der Linie II -II der Fig. 1;

Fig. 3 ein Adapterstück in Ansicht des Pfeiles A in Fig. 1 und

Fig. 4 das aus Fig. 3 ersichtliche Adapterstück in dem der Fig. 1 entsprechenden Längsschnitt.

Mit den Bezugzeichen 1 bzw. 2 sind Gehäuseteile bezeichnet, die bei der dargestellten Ausführungsform eine Armatur 3 nach außen hin gegen Wärmeverlust isolieren. Diese Armatur 3 ist bei der dargestellten Ausführungsform als Absperrschieber mit einer Betätigungsvorrichtung 5 ausgerüstet, die ein Handrad 4 aufweist. An Flansche 6 bzw. 7 der Armatur 3 ist jeweils eine Rohrleitung 8 bzw. 9 angeflanscht. Bei der Armatur 3 und deren Betätigungsvorrichtung 5 mit Handrad 4 handelt es sich um eine handelsübliche Type. Anstelle einer als Absperrschieber ausgebildeten Armatur 3 kann auch jede andere Armatur oder eine Flanschverbindung innerhalb der Gehäuseteile 1 und 2 vorgesehen sein.

Die Rohrleitung 8 und 9 sind durch Dichtungen 10 bzw. 11 nach außen hin abgedichtet.

Die Gehäuseteile 1 und 2 sind hohlkastenförmig ausgebildet. Ihre Wandungen 12 bzw. 13 bestehen aus einem geeigneten schlag-und stoßfesten und gegen die vorkommenden Medien auch beständigen sowie ozonbeständigen, lichtechtem Kunststoff, z. B. Polypropylen, oder aus einem Polyurethan oder dergleichen.

Die zwischen den Wandungen 12 und 13 gebildeten Hohlräume sind bei der dargestellten Ausführungsform mit einem wärmeisolierenden Werkstoff, insbesondere mit Polyurethanschaumstoff 14, ausgefüllt. Anstelle von Polyurethanschaumstoff 14 kann auch jeder andere geeignete wärmeisolierende Stoff, z. B. Schlackenoder Glaswolle o. dgl., verwendet werden. Durch die Einbringung von Kunststoffschäumen in die durch die Wandungen 12 und 13 begrenzten Hohlräume wird das Gewicht der Gehäuseteile 1 und 2 nur unwesentlich erhöht, so daß sich diese besonders gut handhaben lassen. Vor allem ist der Schutz immer von großer Bedeutung.

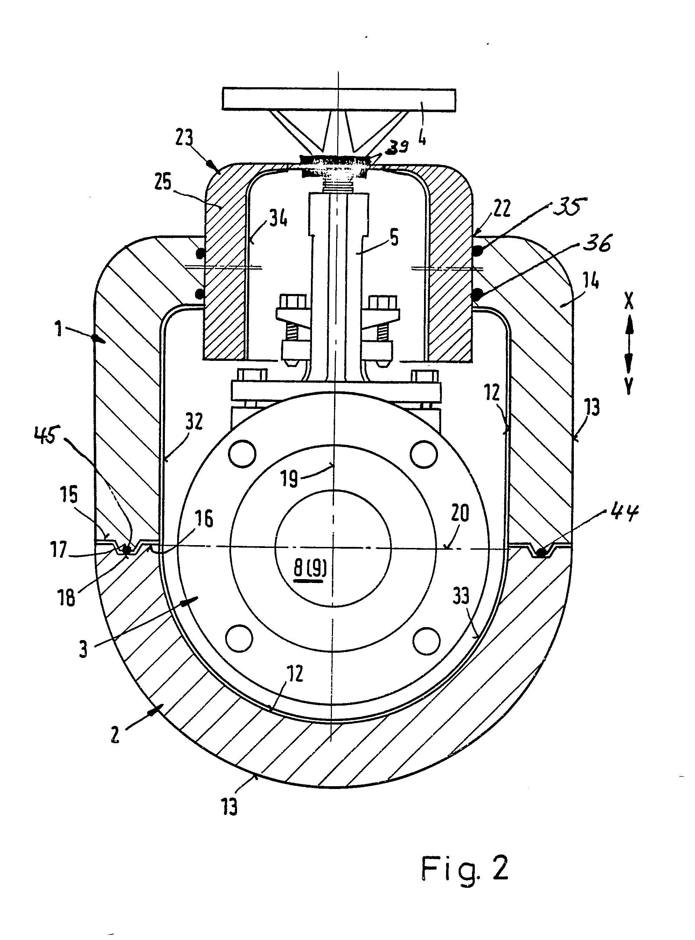

Deutlich läßt Fig. 2 erkennen, daß die Gehäuseteile 1 und 2 sich über einander zugekehrte Flansche 15 und 16 berühren. Das Gehäuseteil 1 ist mit einem aus Fig. 2 ersichtlichen Querschnitt mit einer Feder in Form eines trapezförmigen Vorsprungs 17 versehen, die in eine angepaßte Nut 18 eingreift, so daß Feder 17 und Nut 18 eine Nut-Feder-Verbindung bilden, die die Gehäuseteile 1 und 2 axial und radial arretieren. Innerhalb der durch die Flansche 15 und 16 gehenden Ebene verlaufen nicht dargestellte Schrauben, die in sickenförmigen Aussparungen des einen Gehäuseteils, z. B. 1, unverlierbar angeordnet sind und in Sackbohrungen eingreifen, die in der Gegenfläche des anderen Gehäuseteils, vorliegend 2, ausmünden und in der Ebene, die durch die Flansche 15 und 16 gebildet ist, angeordnet sind. Beispielsweise können auf jeder Seite der Mittenachse 19 zwei solcher Befestigungsschrauben mit Abstand zueinander angeordnet sein. Fig. 2 läßt erkennen, daß die Flansche 15 und 16 und damit die Nut-Feder-Verbindung 17 und 18 in der Ebene der Gehäusequermittenachse 20 liegen. Diese Quermittenachse 20 verläuft durch den Mittelpunkt der Leitungen 8 und 9.

Koaxial zur Betätigungsvorrichtung 5 ist in dem Gehäuseteil 1 eine bei der dargestellten Ausführungsform im Querschnitt kreisrunde Öffnung 22 ausgespart, durch die ein Adapterstück 23 hindurchgreift, das ebenso wie die Gehäuseteile 1 bzw. 2 hohl ausgebildet ist und aus dem gleichen Werkstoff wie die Gehäuseteile 1 und 2 besteht. Der Hohlraum 24 kann mit dem gleichen wärmeisolierenden Stoff 25, beispielsweise Kunststoffschaum, ausgefüllt sein wie die Gehäuseteile 1, 2. Das Adapterstück 23 umgreift mit radialem Abstand die Betätigungsvorrichtung 5 und ist in seiner axialen Richtung, also in Richtung X bzw. Y, verstellbar angeordnet. Bei der dargestellten Ausführungsform besitzt das Adapterstück 23 über seinen Umfang gleichmäßig verteilt angeordnete Führungsnuten 26, 27, 28 und 29, die in entsprechende Vorsprünge des Gehäuseteils 1 eingreifen. Diese Führungsnuten 26 bis 29 und die dazugehörigen Vorsprünge des Gehäuseteils 1 können im Bedarfsfalle auch entfallen.

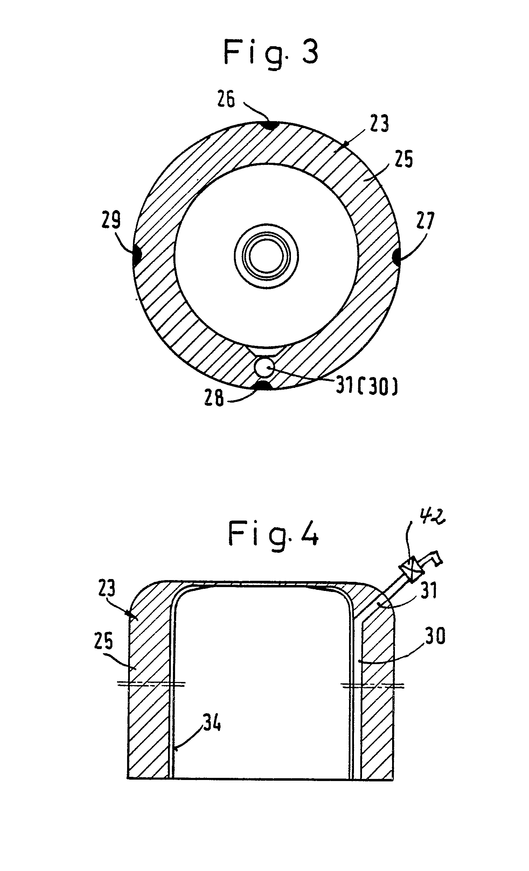

Aus den Figuren 1 und 4 ersichtlich, daß im Innern des Adapterstücks 23 eine Auslaufrinne 30, die in einen stumpf anschließenden, nach außen ausmünden Kanalabschnitt 31 ausmündet, angeordnet ist. Durch diese Auslaufrinne 30 und den Kanal 31 kann Tropfwasser, das durch die Stopfbuchse der Betätigungsvorrichtung 5 heraussickert, nach außen abgelassen werden. Zu diesem Zweck kann das Gehäuse so angeordnet werden, daß die Betätigungsvorrichtung 5 nach unten weist, so daß das Tropfwasser unter dem Einfluß der Erdschwere abläuft.

Wie ersichtlich ist, können die Gehäuseteile 1 und 2 für bestimmte Abmessungsbereiche unverändert gelassen werden, während unterschiedliche Höhen (Längen) der Betätigungsvorrichtung 5 und/oder Durchmesser durch Austausch der Adapterstücke 23 kompensiert werden können.

Bei ein und demselben Durchmesser der Betätigungsvorrichtung 5 lassen sich unterschiedliche Längen durch axiale Verstellung in Richtung X bzw. Y der Adapterstücke 23 ausgleichen, was z. B. ohne weiteres durch mehr oder weniger weites Hineinschieben des betreffenden Adapterstückes 23 geschehen kann.

Mit dem Bezugszeichen 32 bzw. 33 bzw. 34 ist eine vorzüglich wärmereflektierende Schicht, z. B. eine Aluminiumbeschichtung, bezeichnet.

Mit dem Bezugszeichen 35 bzw. 36 sind zwei Dichtungselemente bezeichnet, die mit Abstand sowie parallel zueinander in formmäßig angepaßten Nuten des Gehäuseteils 1 angeordnet sind und sich federelastisch gegen die äußere Mantelfläche des Adapterstückes 23 abstützen und dadurch an dieser Stelle das Gehäuseinnere 37 zuverlässig an dieser Stelle der Konstruktion nach außen hin abdichten. Die Dichtungselemente 35, 36 können als O-Ringe, als Lippendichtungen, als Doppellippendichtungen oder als andere geeignete Dichtungen ausgebildet sein, die in zuverlässigerweise die Aufrechterhaltung eines Unterdruckes im Inneren 37 des Gehäuses 1 sicherstellen. Sofern Führungsnuten 26 bis 29 vorgesehen sind, werden diese ebenfalls abgedichtet oder die Führungsnuten entfallen. Wenn Lippendichtungen gewählt werden, wird zweckmäßigerweise jeweils mindestens eine Lippe nach außen, also zur Atmosphäre und die andere Lippe zum Gehäuseinnern 37 hingerichtet, so daß die Dichtwirkung durch den jeweiligen Druck unterstützt werden kann.

Die durch das Handrad 4 betätigte Spindel 38 ist ebenfalls durch ein Dichtelement 39 nach innen und außen luftdicht abgedichtet, so daß auch hierüber das im Gehäuseinnere 37 herrschende Vakuum oder der Teilunterdruck nicht zerstört werden kann. Bei dieser Dichtung 39 kann es sich um flexible Dichtmanschetten handeln, die federelastisch in die Schraubengänge der Spindel 38 eingreift und außerdem die Durchtrittsöffnung für die Spindel 38 durch das Adapterstück 23 sicher luftdicht abdichtet.

Die Rohrleitungen 8 und 9 sind bei der dargestellten Ausführungsform durch je ein Dichtungselement 40 bzw. 41 ebenfalls luftdicht abgedichtet. Auch diese Dichtungselemente können als O-Ringe, als Lippendichtungen oder als sonstige geeignete Dichtungen ausgebildet sein, um den Unterdruck im Gehäuse 37 aufrecht zu erhalten. Es können auch mehr als nur jeweils eine der dargestellten Dichtungen 40 bzw. 41 angeordnet werden. Die Dichtungen werden zweckmäßigerweise ebenfalls in Nuten der Gehäuseteile 1 bzw. 2 verschiebungssicher angeordnet und fixiert.

Mit dem Kanal 31 ist eine Armatur 42 verbunden, die bei der dargestellten Ausführungsform als Absperrschieber oder als Absperrhahn ausgebildet ist, mit dessen Mundstück 43 eine geeignete, insbesondere transportable Vakuumpumpe zu verbinden ist, so daß über den Kanal 31 auch nach etwaigen Reparaturen oder nach Montagen das Gehäuseinnere 37 evakuiert werden kann. Durch die Armatur 42 sind der Kanal 31 und alle damit in Verbindung stehenden, nach außen mündenden Öffnungen luftdicht abgeschottet.

Die Gehäusehälften 1 und 2 sind an ihren einander zugekehrten Flanschen 15 und 16 (Fig. 2) durch jeweils ein Dichtungselement 44 bzw. 45 luftdicht nach außen hin abgeschottet. Die Dichtungselemente 44 bzw. 45 können wiederum in Nuten od. dgl. angeordnet sein. Auch ist die dargestellte Anordnung der Dichtungselemente 44 bzw. 45 nicht zwingend. Vielmehr können diese auch an anderer, geeigneter Stelle vorgesehen sein.

Außerdem ist es möglich, diese Dichtungselemente in Nuten zu fixieren. Schließlich können statt O-Ringe auch andere geeignete Dichtungsformen, beispielsweise Lippendichtungen oder Doppellippendichtungen, zur Verwendung gelangen. Auch können mehrere solcher Dichtungselemente 44, 45 in der geeigneten Form neben-und/oder hintereinander angeordnet werden.

Alle im Rahmen der Erfindung verwendeten Dichtungselemente können in der geeigneten Art und Weise federelastische Eigenschaften aufweisen, beispielsweise aus einem geeigneten Kunststoff, z. B. einem Polyurethankunststoff, mit kautschukartigen Eigenschaften bestehen, der in dem erforderlichen Maße lichtecht, alterungsbeständig und beständig gegen die beim Einsatz auftretende Dämpfe, Stäube und sonstigen industriellen Gase, ist und auch nach längerer Einsatzdauer nicht zur Versprödung neigt. Der Kunststoff wird nicht durch Öle, Fette, Benzin oder Emulsionen zerstört. Solche Kunststoffe werden beispielsweise von den Bayer-Werken, Leverkusen, unter dem Namen "Baypren" für die verschiedensten Anwendungsgebiete vertrieben und können nach geeigneter Formgestaltung auch im Rahmen der Erfindung eingesetzt werden.

Die in der Zusammenfassung, in den Patentansprüchen und in der Beschreibung beschriebenen und aus der Zeichnung ersichtlichen Merkmale können sowohl einzeln als auch in Beliebigen Kombinationen für die Verwirklichung der Erfindung wesentlich sein.

## Bezugszeichenliste

1 Gehäuseteil
2 Gehäuseteil
3 Armatur
4 Handrad
5 Betätigungsvorrichtung
6 Flansch
7 Flansch
8 Rohrleitung
9 Rohrleitung
10 Dichtungen
11 Dichtungen
12 Wandung
13 Wandung
14 Polyurethan-Schaumstoff
15 Flansch
16 Flansch
17 Vorsprung, Feder
18 Nut
19 Mittenachse
20 Gehäusequermittenachse
21 -
22 Öffnung

23 Adapterstück
24 Hohlraum
25 Stoff
26 Führungsnuten
27 Führungsnuten
28 Führungsnuten
29 Führungsnuten
30 Auslaufrinne
31 Kanal
32 wärmereflektierende Schicht
33 wärmereflektierende Schicht
34 wärmereflektierende Schicht
35 Dichtelement
36 Dichtelement
37 Gehäuseinneres
38 Spindel
39 Dichtungselement
40 Dichtungselement
41 Dichtungselement
42 Armatur
43 Mundstück
44 Dichtungselement
45 Dichtungselement
A Ansichtsrichtung
X Verstellrichtung, Verschieberichtung
Y Verstellrichtung, Verschieberichtung

**Ansprüche**

1. Gehäuse für wärmeisolierte Armaturen und/oder Flanschverbindungen, mit zwei kastenförmigen Gehäuseteilen (1, 2) mit vorzugsweise zwei Öffnungen für die Rohrleitungen (8, 9) und insbesondere einer weiteren Öffnung (22) für die aus dem Gehäuse (1, 2) herausgeführte Betätigungsvorrichtung (5) der Armatur (3), wobei die Gehäuseteile (1, 2) benachbart der Gehäuseteilungsebene wenigstens je einen Flansch (15, 16) o. dgl. aufweisen und die Gehäuseteile (1, 2) durch Schrauben lösbar miteinander verbunden sind, die durch Umfangsabschnitte der Gehäuseteile (1, 2) in Form von Befestigungsflansche o. dgl. greifen, wobei insbesondere den Gehäuseteilen (1, 2) ihre Einbaulage zueinander vorzugsweise zentrierende bzw. bestimmende, formschlüssig ineinandergreifende, mit den Gehäuseteilen (1, 2) einstückig verbundene Zentriermittel (17, 18) zugeordnet sind, die nach Art einer Nut-Feder-Verbindung ausgestaltet sind und die sich über zumindest Teile des Umfanges der Gehäuseteile (1, 2) erstrecken, **dadurch gekennzeichnet** , daß bei Verwendung des Gehäuses im Kaltwasserbereich, z. B. für Kaltwassersätze in Klimaanlagen der Öffnung (22) für die aus dem Gehäuse (1, 2) herausgeführte Betätigungsvorrichtung der Armatur (3) und/oder einer oder mehreren Öffnungen für die Rohrleitungen (8, 9) jeweils ein in seiner axialen Erstreckung und/oder im Durchmesser veränderliches Adapterstück (23) zum Ausgleich unterschiedlicher Abmessungen von Betätigungsvorrichtungen (5) - axiale Länge der Betätigungsvorrichtung (5) und/oder deren Durchmesser -und/oder der Rohrleitungen (8, 9) zugeordnet ist bzw. sind und daß das Gehäuse (1, 2) selbst, aber auch das Adapterstück (23) und etwaige Öffnungen für die aus dem Gehäuse (1, 2) herausgeführte Betätigungsvorrichtung (5) und Öffnungen für die in das Gehäuse (1, 2) einmündenden Rohrleitungen (8, 9) jeweils durch ein oder durch mehrere Dichtungselemente (35, 36, 39, 40, 41) nach außen hin zur Aufrechterhaltung eines Unterdruckes im Gehäuse (1, 2) abgedichtet ausgebildet sind.

2. Gehäuse nach Anspruch 1, **dadurch gekennzeichnet**, daß das Adapterstück (23) an seinem Umfang im Gehäuse (1, 2) durch eine oder mehrere Dichtungen (35, 36), die in axialer Richtung des Adapterstückes (23) hintereinander angeordnet sind, im Gehäuse (1, 2) axial verstellbar abgedichtet ist.

3. Gehäuse nach Anspruch 1 und/oder 2, **dadurch gekennzeichnet,** daß die Gehäuseteile (1, 2) oder die Gehäusehälften an ihren einander angrenzenden Wandabschnitten durch ein Dichtungselement oder durch mehrere Dichtungselemente (44, 45) abgedichtet sind, die vorzugsweise an den ineinander eingreifenden Gehäuseabschnitten (17, 18) eingebettet angeordnet sind.

4. Gehäuse nach einem oder mehreren der vorhergehenden Ansprüche, **dadurch gekennzeichnet**, daß die Betätigungsvorrichtung (5), beispielsweise ein Spindelgehäuse oder die Spindel (38) selbst durch eine Manschette, eine Dichtungsmuffe oder durch ein geeignetes anderes Abdichtungselement (39) luftdicht nach außen herausgeführt ist.

5. Gehäuse nach einem oder mehreren der vorhergehenden Ansprüche, **dadurch gekennzeichnet**, daß die Dichtungen aus einem federelastische Eigenschaften aufweisenden, gegen die unter Betriebsbedingungen vorkommenden Medien beständigen Elastomere bestehen und in einer oder in mehreren in den Gehäusewandungen angeordneten Nuten verschiebungssicher eingebettet angeordnet sind und sich unter Federspannung gegen die jeweils zugeordnete Wandung abstützen.

6. Gehäuse nach einem oder mehreren der vorhergehenden Ansprüche, **dadurch gekennzeichnet** , daß an das Gehäuseinnere ein Kanal (31) angeschlossen ist, der mit einer verschließbaren Armatur in Verbindung steht, mit der eine geeignete Vakuumpumpe lösbar zu verbinden ist, durch die das Gehäuse evakuierbar ist.

Fig.1

0 235 314

Fig. 2

# Fig. 3

# Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 070 065 (WAVIN)<br>* Figur 1; Ansprüche 1,6 * | 1,2,4 | F 16 L 59/16 |
| A | EP-A-0 108 856 (HACKL)<br>* Figuren * | 1 | |
| A | CH-A- 315 181 (ERNST)<br>* Figuren * | 1 | |
| D,A | EP-A-0 141 986 (JACOBS)<br>* Figur 1 * | 1 | |
| A,D | CA-A- 906 980 (KNUDSEN)<br>* Figuren 1,2 * | 1 | |
| A | US-A-4 298 554 (VOGEL et al.) | | |

RECHERCHIERTE
SACHGEBIETE (Int. Cl.4)

F 16 L

Der vorliegende Recherchenbericht wurde für alle Patentansprüche erstellt.

| Recherchenort | Abschlußdatum der Recherche | Prüfer |
|---|---|---|
| DEN HAAG | 06-10-1986 | SCHAEFFLER C.A.A. |

EPA Form 1503 03.82